Europäisches Patentamt

European Patent Office

Office européen des brevets

(11) Numéro de publication: **0 274 060 B1**

(12) **FASCICULE DE BREVET EUROPEEN**

(19)

(45) Date de publication de fascicule du brevet: **13.05.92**   (51) Int. Cl.⁵: **G02B 6/44**

(21) Numéro de dépôt: **87117889.3**

(22) Date de dépôt: **03.12.87**

(54) Boîte de raccordement pour cables à fibres optiques.

(30) Priorité: **05.12.86 FR 8617063**

(43) Date de publication de la demande:
**13.07.88 Bulletin 88/28**

(45) Mention de la délivrance du brevet:
**13.05.92 Bulletin 92/20**

(84) Etats contractants désignés:
**BE DE ES FR GB IT NL SE**

(56) Documents cités:
**EP-A- 0 066 829**
**EP-A- 0 083 101**
**FR-A- 2 515 363**

**PATENT ABSTRACTS OF JAPAN, vol. 6, no.**
**141 (P-131)[1019], 30 juillet 1982; & JP-A-57**
**64 205**

(73) Titulaire: **ALCATEL CABLE**
**30, rue des Chasses**
**F-92111 Clichy Cédex(FR)**

(72) Inventeur: **Mignien, Georges**
**1 résidence les Capucines Leulinghen-**
**Bernes**
**F-62250 Marquise(FR)**

(74) Mandataire: **Weinmiller, Jürgen et al**
**Lennéstrasse 9 Postfach 24**
**W-8133 Feldafing(DE)**

EP 0 274 060 B1

# Description

La présente invention est relative au raccordement des câbles à fibres optiques, notamment des câbles sous-marins à fibres optiques utilisés dans les liaisons de transmission.

Les câbles à fibres optiques comportent, de manière générale, une gaine de protection souvent composite renfermant un ensemble de fibres optiques disposées avec ou sans surlongueur, dans ou autour d'un élément porteur les protégeant contre les efforts de traction.

Lors d'un raccordement de câbles à fibres optiques, il faut coller ou souder les fibres optiques bout à bout tout en leur laissant éventuellement une certaine surlongueur, attacher ensemble les éléments porteurs et reconstituer la gaine de protection. Cela se fait à l'aide de boîtes de raccordement telles que celle décrite dans le brevet français n° 2 519 149. Cette dernière se présente sous la forme d'un tube conteneur qui est fermé à ses deux extrémités par des couvercles traversés par les fibres optiques et fixés aux éléments porteurs des câbles, et qui est revêtu à l'extérieur d'une gaine de protection raccordée à celles des câbles. Le tube conteneur forme une boîte d'épissurage pour les fibres optiques et assure avec les couvercles la continuité mécanique des éléments porteurs des câbles à raccorder. Il renferme un mandrin cylindrique qui sert de support d'enroulement pour les extrémités des fibres optiques raccordées deux à deux et dont les extrémités sont creuses et percées d'ouvertures latérales permettant la sortie des fibres optiques après leur traversée des couvercles pour leur raccordement à sa périphérie.

Ce genre de boîtier de raccordement à l'inconvénient de ne pas protéger les fibres optiques contre les risques de torsion qu'elles peuvent subir notamment à leur traversée du mandrin et également de coincement en cas de fausse manoeuvre de l'opérateur pendant la mise en place du tube conteneur sur le mandrin au cours de la fermeture de la boîte.

La présente invention a pour but d'éviter ces inconvénients tout en facilitant les opérations de raccordement.

Elle a pour objet une boîte de raccordement pour câbles à fibres optiques comme définié à la revendication 1.

Selon une autre caractéristiques de l'invention, lesdits parois coniques sont à section axiale convexe de rayon de courbure supérieur au rayon de courbure minimum que les fibres optiques peuvent supporter sans dommage.

Selon une autre caractéristique de l'invention, la paroi laterale de la cuve cylindrique de stockage présente à ses parois, avant de devenir conique, un évidement intérieur annulaire de plus grand diamètre que la partie centrale dans lequel les surlongueurs de fibres optiques ont tendance à s'enrouler lorsqu'elles sont repoussées à l'intérieur de la cuve de stockage par l'ouverture latérale.

Les fibres optiques sont protégées contre les risques de courbures excessives à l'intérieur de la cuve de stockage par les formes arrondies de la paroi interne de cette dernière. De plus, elles ne courent plus aucun risque de torsion ou de coincement lors de la mise en place du tube conteneur sur les couvercles puisqu'elles se trouvent entièrement à l'intérieur de la cuve de stockage.

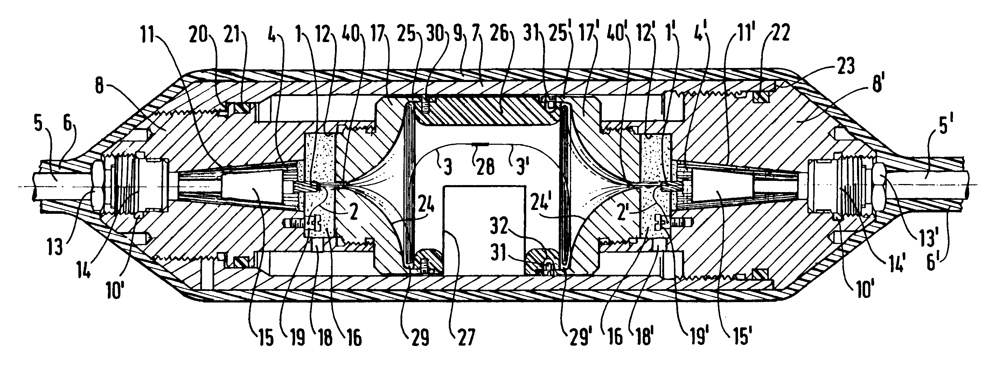

D'autres caractéristiques et avantages de l'invention ressortiront ci-après de la description d'un mode de réalisation donné à titre d'exemple. Cette description sera faite en regard du dessin dont la figure unique représente une coupe axiale d'une boîte de raccordement selon l'invention en place entre deux câbles à fibres optiques.

La boîte de raccordement représentée est destinée à un câble sous-marin à fibres optiques constitué, comme on peut le voir à ses extrémités pénétrant dans la boîte de raccordement, d'un coeur optique formé d'un jonc 1, 1′ en plastique renforcé par un toron central 2, 2′ et creusé à sa périphérie de rainures hélicoîdales dans lesquelles sont disposées avec une surlongueur éventuelle, des fibres optiques 3, 3′, d'un élément porteur et protecteur constitué d'une voûte en fils d'acier 4, 4′ recouverte d'un tube de cuivre 5, 5′ assurant l'étanchéité et jouant le rôle d'un conducteur électrique de téléalimentation, et d'une gaine extérieure isolante de protection en polyéthylène 6, 6′.

La boîte de raccordement comporte un tube conteneur métallique 7 qui est fermé à ses deux extrémités par des couvercles métalliques vissés 8, 8′ ancrés aux voûtes de fils d'acier 4, 4′ des câbles à raccorder et en contact électrique avec leurs tubes de cuivre 5, 5′, et qui protège les raccords des fibres optiques en assurant en outre la continuité mécanique des éléments porteurs et la continuité électrique des tubes de cuivre des câbles à raccorder. L'ensemble du tube conteneur 7 et des couvercles 8, 8′ est revêtu extérieurement d'une gaine isolante de protection en polyéthylène 9 assurant la continuité des gaines isolantes extérieures du protection 6, 6′ des câbles à raccorder.

Chaque couvercle 8, 8′ est percé d'un alésage qui est traversé par une extrémité de câble à raccorder, commence depuis l'extérieur de la boîte de raccordement par une chambre cylindrique d'entrée 10, 10′ à paroi latérale filetée, se poursuit par un étranglement conique 11, 11′ s'évasant vers l'intérieur de la boîte de raccordement et se termine par une chambre cylindrique de sortie 12, 12′ filetée sur son bord intérieur.

La chambre cylindrique d'entrée 10, 10' renferme une pièce métallique d'arrêt de l'extrémité du tube de cuivre 5, 5'. Cette pièce d'arrêt comporte deux manchons coniques enfilés à l'extrémité du tube de cuivre 5, 5' et vissés l'un dans l'autre, le manchon intérieur 13, 13' étant déformable sous l'action du manchon extérieur 14, 14' et rétreignant le tube de cuivre 5, 5' sur la voûte de fils d'acier 4, 4' et le manchon extérieur 14, 14' se vissant dans le filetage de la paroi intérieure de la chambre cylindrique d'entrée 10, 10'.

L'étranglement conique 11, 11' sert à l'ancrage des couvercles 8, 8' sur l'extrémité de la voûte de fils d'acier 4, 4' des câbles à raccorder. Il contient une bague conique 15, 15' qui est traversée par le coeur optique de ces câbles et engagée sous les fils d'acier 4, 4' de la voûte de manière à les épanouir. Il est rempli d'une résine époxide 16 scellant en position les extrémités des fils d'acier 4, 4'.

La chambre cylindrique de sortie 12, 12' est fermée par le culot vissé d'une pièce en entonnoir 17, 17' qui lui présente un étroit passage axial 40, 40' pour les fibres optiques 3, 3'. Elle sert à établir une barrière d'étanchéité au niveau des coeurs optiques des câbles à raccorder et est remplie, en même temps que l'étranglement conique 11, 11', d'une résine époxide introduite par une ouverture latérale 18, 18'. Le jonc rainuré 1,1' des câbles à raccorder s'arrête à son niveau, le câble de renforcement 2, 2' de ce jonc étant amarré à une borne à vis 19, 19' fixée à sa paroi.

Extérieurement, les couvercles 8, 8' qui se vissent aux extrémités du tube conteneur 7 n'ont pas les mêmes diamètres. Le couvercle 8, de plus petit diamètre, présente un filetage externe commençant du côté extérieur à la boîte de raccordement et butant du côté intérieur à la boîte de raccordement sur un épaulement externe 20 rainuré logeant un joint torique d'étanchéité 21. Le couvercle 8', de plus grand diamètre, présente un filetage externe commençant du côté intérieur de la boîte de raccordement et se terminant, vers le côté extérieur de la boîte de raccordement, sur une rainure annulaire logeant un joint torique d'étanchéité 22 suivi d'un épaulement externe 23. Ces différences de profils externes des couvercles 8, 8', reproduites de manière complémentaire par les profils internes des extrémités du tube conteneur 7 facilitent le montage car elles permettent au tube conteneur 7 d'être enfilé en attente sur l'extrémité du câble se fixant au couvercle 8, puis d'être ramené en fin d'opération de raccordement et vissé en même temps aux couvercles 8 et 8'.

Les pièces en entonnoir 17, 17' constituent les extrémités d'une cuve cylindrique de stockage de fibres optiques logées dans le tube conteneur 7. Leur côté évasé élargit progressivement l'étroit passage axial 40, 40' emprunté par les fibres optiques 3, 3', jusqu'au diamètre du volume cylindrique intérieur de la cuve de stockage, en suivant un profil intérieur à surface conique 24, 24', de section axiale convexe à rayon de courbure supérieur au rayon de courbure minimum que les fibres optiques 3, 3' peuvent supporter sans dommage et se termine par un rebord cylindrique 25, 25'.

La paroi latérale de la cuve cylindrique de stockage est formée d'une entretoise cylindrique 26 en matière plastique, aux formes arrondies, pourvue d'une large ouverture latérale 27 permettant de sortir les extrémités des fibres optiques 3, 3' pour les raccorder à l'extérieur deux à deux et bout à bout, puis de les réintroduire avec leurs raccords 28 à l'intérieur de la cuve de stockage sans leur faire subir des courbures de rayon inférieur à ce qu'elles peuvent supporter sans dommage. L'entretoise cylindrique 26 s'emboîte de part et d'autre dans les rebords 25, 25' des côtés évasés des pièces en entonnoir 17, 17' sans toutefois parvenir au fond de ces rebords 25, 25' de manière à laisser, aux deux extrémités de la cuve cylindrique de stockage, deux évidements circulaires 29, 29' de plus grand diamètre dans lesquels les surplus de longueur des fibres optiques 3, 3' ont une tendance naturelle à s'enrouler lorsqu'on les repousse à l'intérieur de la cuve de stockage depuis l'ouverture latérale 27, ces évidements circulaires 29, 29' ayant dans tous les cas, un diamètre supérieur à celui de la spire minimale autorisée pour les fibres optiques 3, 3'.

L'entretoise cylindrique 26 est rendue solidaire de la pièce en entonnoir 17 par un ensemble de vis périphériques 30 et fixée à l'autre pièce en entonnoir 17' par un système de pions périphériques 31 coulissant dans une rainure annulaire 32 autorisant un mouvement de rotation et un léger débattement entre les pièces de manière à éviter une solidarisation des deux couvercles 8, 8' par l'itermédiaire de l'entretoise 26 et des pièces en entonnoir 17, 17', et à permettre leurs serrages indépendants par rapport au tube conteneur 7.

On peut, sans sortir du cadre de l'invention modifier certaines dpositions ou remplacer certains moyens par des moyens équivalents. La boîte de raccordement qui vient d'être décrite peut s'adapter notamment aux raccordements de câbles à fibres optiques ayant une structure de coeur optique ou d'élément porteur différente de celle prise en exemple par une modification adéquate de ses couvercles 8, 8'. Elle peut également, dans le même ordre d'idée, être utilisée pour le raccordement de deux câbles optiques à structures différentes en adaptant chacun des couvercles 8,8' à la structure de l'un des câbles.

## Revendications

**1.** Boîte de raccordement pour câbles à fibres optiques, comportant un tube conteneur (7) fermé à ses extrémités par deux couvercles (8, 8') visses traversés par les fibres optiques (3, 3') des câbles à raccorder : fixés auxdits couvercles par leurs éléments porteurs, le tube étant susceptible d'être devissé des couvercles et enfilé sur l'un des câbles en vue d'accéder à l'intérieur de la boîte de raccordement, caractérisée en ce que ledit tube conteneur renferme une cuve cylindrique de stockage (26, 17, 17') des fibres optiques raccordées ladite cuve présentant une paroi laterale cylindrique se terminant à chacune de ses extrémités par une paroi conique (24, 24') se rétrecissant en direction des couvercles en menant à un étroit passage (40, 40') emprunté par les fibres optiques (3, 3') provenant des couvercles (8, 8'), et ladite paroi laterale cylindrique étant pourvue d'une large ouverture latérale (27) permettant de sortir à l'extérieur de la cuve, lorsque le tube est enlevé, les extrémités des fibres optiques (3, 3') introduites dans la cuve par lesdits étroits passages des câbles pour les raccorder bout à bout et de les réintroduire avec leurs raccords (28) dans la cuve cylindrique de stockage.

**2.** Boîte de raccordement selon la revendication 1, caractérisée en ce que lesdites parois coniques (24, 24') sont à section axiale convexe de rayon de courbure supérieur au rayon de courbure minimum que les fibres optiques (3, 3') peuvent supporter sans dommage.

**3.** Boîte de raccordement selon la revendication 1, caractérisée en ce que la paroi laterale de la cuve cylindrique de stockage (26, 17, 17') présente, au voisinage de chacune de ses parois coniques un évidement intérieur annulaire (29, 29') de plus grand diamètre que la partie centrale dans lequel les surplus de longueur des fibres optiques (3, 3') ont tendance à s'enrouler lorsqu'ils sont repoussés à l'intérieur de la cuve depuis l'ouverture latérale (27).

**4.** Boîte de raccordement selon la revendication 1, caractérisée en ce que la paroi laterale de la cuve cylindrique de stockage de fibres optiques est constituée d'une entretoise cylindrique (26) pourvue d'une large ouverture latérale (27) et intercalée entre deux pièces en entonnoir (17, 17') se faisant face par leurs côtés évasés qui constituent lesdites parois coniques (24, 24')

**5.** Boîte de raccordement selon la revendication 4, caractérisée en ce que chacune desdites pièces en entonnoir (17, 17') présente dans son côté évasé des parois intérieures de surface conique (24, 24') qui mènent à l'étroit passage (40, 40') emprunté par les fibres optiques (3, 3') et dont la section axiale est convexe avec un rayon de courbure supérieur au rayon de courbure minimum que les fibres optiques peuvent supporter sans dommage.

**6.** Boîte de raccordement selon la revendication 4, caractérisée en ce que chacune des pièces en entonnoir (17, 17') présente, du côté évasé, un rebord cylindrique périphérique (25, 25') dans lequel s'emboîte une extrémité de l'entretoise cylindrique (26).

**7.** Boîte de raccordement selon la revendication 6, caractérisée en ce que l'entretoise cylindrique (26) n'est pas emboîtée jusqu'au fond des rebords cylindriques (25, 25') des pièces en entonnoir (17, 17') et laisse libre au voisinage du fond de ces rebords (25, 25') des évidements annulaires (29, 29') de plus grand diamètre dans lesquels le surplus de longueur des fibres optiques (3, 3') ont tendance à s'enrouler lorsqu'on les repousse à l'intérieur de la cuve de stockage sur l'ouverture latérale (27).

**8.** Boîte de raccordement selon la revendication 1, caractérisée en ce qu'elle comporte des moyens assurant une fixation de la cuve cylindrique de stockage (26, 17, 17') aux deux couvercles (8, 8') du tube conteneur (7) tout en laissant ces derniers libres en rotation l'un par rapport à l'autre et en autorisant un certain débattement entre eux.

**9.** Boîte de raccordement selon la revendication 8, caractérisée en ce que lesdits moyens de fixation comportent un joint mécanique rotatif formé d'un ensemble de pions (31) coulissant dans une rainure annulaire (32).

## Claims

**1.** A connection box for optical fiber cables, the box comprising a container tube (7) closed at its ends by two screwed-in covers (8, 8') through which the optical fibers (3, 3') of the cables to be connected pass, said cables being fixed to said covers by their supporting members, the tube being susceptible to be unscrewed and displaced, allowing access to the interior of the connection box, said box being characterized in that the container tube encloses a cylindrical tank (21, 17, 17') for storing the connected optical fibers, said tank comprising a cylindrical lateral wall terminating at each of its ends in a conical wall (24, 24'), which converges towards the covers and leads to a narrow passage (40, 40') through which the optical fibers (3, 3') pass on coming from the covers (8, 8'), and said cylindrical lateral wall being provided with a large side opening (27), enabling the ends of the optical fibers (3, 3') that have been introduced into the tank via said narrow passages to be drawn to the outside of the tank, when the tube is displaced, in order to connect them end-by-end and to reinsert them together with their connectors (28) into the cylindrical storage tank.

2. A connection box according to claim 1, characterized in that said conical walls (24, 24') have a convex axial crosssection whose radius of curvature is greater than the minimum radius of curvature which the optical fibers (3, 3') can withstand without damage.

3. A connection box according to claim 1, characterized in that the lateral wall of the cylindrical storage tank (26, 17, 17') has an annular inside recess (29, 29') in the vicinity of each of its conical ends, the recess being of larger diameter than the central portion and the spare lengths of the optical fibers (3, 3') tending to coil in the recesses when the optical fibers are returned into the tank through the side opening (27).

4. A connection box according to claim 1, characterized in that the lateral wall of the cylindrical optical fiber storage tank is constituted by a cylindrical spacer (26) provided with a large side opening (27) and disposed between two funnel-shaped parts (17, 17') whose flared sides constituting said conical walls (24, 24') face each other.

5. A connection box according to claim 4, characterized in that each of said funnel-shaped parts (17, 17') has a conical surface inside wall (24, 24') in its flared side leading to the narrow passage (40, 40') through which the optical fibers (3, 3') pass, the axial cross-section of said conical surface being convex and having a radius of curvature which is greater than the minimum radius of curvature which the optical fibers can withstand without damage.

6. A connection box according to claim 4, characterized in that each of the funnel-shaped parts (17, 17') has a peripheral cylindrical lip (25, 25') at its flared end which receives one of the ends of the cylindrical spacer (26).

7. A connection box according to claim 6, characterized in that the cylindrical spacer (26) is not fully inserted into the cylindrical lips (25, 25') of the funnel-shaped parts (17, 17'), thereby leaving larger diameter annular recesses (29, 29') in the vicinity of the bottom of said lips (25, 25'), in which recesses spare lengths of optical fiber (3, 3') tend to coil when the fibers are returned into the storage tank via the side opening (27).

8. A connection box according to claim 1, characterized in that it includes means for fixing the cylindrical storage tank (26, 17, 17') to the two covers (8, 8') of the container tube (7) while leaving said covers free to rotate relative to each other and also allowing a degree of slack therebetween.

9. A connection box according to claim 8, characterized in that said fixing means comprise a rotary mechanical connection constituted by a set of pegs (31) sliding in an annular groove (32).

**Patentansprüche**

1. Anschlußgehäuse für Lichtleitkabel, mit einem Behälterrohr (7), das an seinen Enden mit zwei eingeschraubten Deckeln (8, 8') verschlossen ist, die von den Lichtleitfasern (3, 3') der zu verbindenden Kabel, welche an den Deckeln mit ihren Tragelementen befestigt sind, durchquert werden, wobei das Rohr von den Deckeln abgeschraubt und auf eines der Kabel aufgeschoben werden kann, um an das Innere des Anschlußgehäuses heranzukommen, dadurch gekennzeichnet, daß das Behälterrohr ein zylindrisches Speichergefäß (26, 17, 17') für die angeschlossenen Lichtleitfasern umschließt, wobei das Gefäß eine zylindrische Seitenwand besitzt, die an jedem ihrer Enden in einer konischen Wand (24, 24') endet, welche sich in Richtung der Deckel einschnürt und zu einem engen Durchgang (40, 40') durch den die von den von den Deckeln (8, 8') kommenden Lichtleitfasern (3, 3') verlaufen, und wobei die zylindrische Seitenwand mit einer großen seitlichen Öffnung (27) versehen ist, die es bei entferntem Rohr ermöglicht, die Enden der in das Gefäß durch die engen Durchgänge eingeführten Lichtleitfasern (3, 3') aus dem Gefäß herauszuziehen, um sie stirnseitig miteinander zu verbinden und mit ihren Verbindungsstücken (28) wieder in das zylindrische Speichergefäß einzubringen.

2. Anschlußgehäuse nach Anspruch 1, dadurch gekennzeichnet, daß die konischen Wände (24, 24') einen konvexen Axialquerschnitt besitzen, dessen Krümmungsradius größer als der kleinste Krümmungsradius ist, den die Lichtleitfasern (3, 3') aushalten können, ohne Schaden zu nehmen.

3. Anschlußgehäuse nach Anspruch 1, dadurch gekennzeichnet, daß die Seitenwand des zylindrischen Speichergefäßes (26, 17, 17') in der Nähe jeder seiner konischen Wände eine ringförmigen, inneren Hohlräume (29, 29') besitzt, der einen größeren Durchmesser aufweist als der Mittelabschnitt, und in welchem sich die Überschußlängen der Lichtleitfasern (3, 3') aufzuwikkeln bestreben, wenn sie von der seitlichen Öffnung (27) her in das Innere des Gefäßes hineingeschoben werden.

4. Anschlußgehäuse nach Anspruch 1, dadurch gekennzeichnet, daß die Seitenwand des zylindrischen Speichergefäßes für die Lichtleitfasern aus einer zylindrischen Abstandshülse (26) besteht, die mit einer großen Seitenöffnung (27) versehen und zwischen zwei Trichterstucke (17, 17') eingefügt ist, die mit ihren aufgeweiteten Seiten einander gegenüberstehen und die konischen Wände (24, 24') bilden.

5. Anschlußgehäuse nach Anspruch 4, dadurch gekennzeichnet, daß jedes der Trichterstücke (17, 17') an seiner aufgeweiteten Seite Innenwände (24, 24') mit konischer Oberfläche besitzt, die zu dem von den Lichtleitfasern (3, 3') durchquerten engen Durchgang (40, 40') führen und deren Axialquerschnitt konvex ist und einen Krümmungsradius besitzt, der größer als der kleinste Krümmungsradius ist, den die Lichtleitfasern (3, 3') aushalten können, ohne Schaden zu nehmen.

6. Anschlußgehäuse nach Anspruch 4, dadurch gekennzeichnet, daß jedes der Trichterstücke (17, 17') an der aufgeweiteten Seite einen peripheren zylindrischen Rand (25, 25') aufweist, in den sich ein Ende der zylindrischen Abstandshülse (26) einfügt.

7. Anschlußgehäuse nach Anspruch 6, dadurch gekennzeichnet, daß die zylindrische Abstandshülse (26) nicht bis zum Grund der zylindrischen Ränder (25, 25') der Trichterstücke (17, 17') eingefügt ist, sondern in der Nähe des Grundes ringförmige Hohlräume (29, 29') mit einem größeren Durchmesser freiläßt, in welchen sich die Überschußlängen der Lichtleitfasern (3, 3') aufzuwickeln bestreben, wenn sie von der seitlichen Öffnung (27) her in das Innere des Gefäßes hineingeschoben werden.

8. Anschlußgehäuse nach Anspruch 1, dadurch gekennzeichnet, daß es Mittel zum Befestigen des zylindrischen Speichergefäßes (26, 17, 17') an den beiden Deckeln (8, 8') des Rohrbehälters (7) aufweist, wobei jedoch die Deckel relativ zueinander frei drehen können und ein gewisses Verschiebungsspiel zwischen denselben gewährleistet ist.

9. Anschlußgehäuse nach Anspruch 1, dadurch gekennzeichnet, daß die Befestigungsmittel eine mechanische Drehverbindung aufweisen, die aus einer Gruppe von Stiften (31) besteht, welche in einer Ringnut (32) gleiten.